(19) **Europäisches Patentamt / European Patent Office / Office européen des brevets**

(11) **EP 4 500 315 B1**

(12) **FASCICULE DE BREVET EUROPEEN**

(45) Date de publication et mention de la délivrance du brevet:
**15.04.2026 Bulletin 2026/16**

(21) Numéro de dépôt: **23716302.7**

(22) Date de dépôt: **31.03.2023**

(51) Classification Internationale des Brevets (IPC):
**G06F 7/58** *(2006.01)*

(52) Classification Coopérative des Brevets (CPC):
**G06F 7/588**

(86) Numéro de dépôt international:
**PCT/EP2023/058478**

(87) Numéro de publication internationale:
**WO 2023/187168 (05.10.2023 Gazette 2023/40)**

(54) **PROCÉDÉ DE GÉNÉRATION ET DE CERTIFICATION SIMULTANÉE DE NOMBRES SUR PUCE PHOTONIQUE**

VERFAHREN ZUR GLEICHZEITIGEN ERZEUGUNG UND ZERTIFIZIERUNG VON ZAHLEN AUF EINEM PHOTONISCHEN CHIP

METHOD FOR GENERATION AND CERTIFICATION OF NUMBERS ON A PHOTONIC CHIP

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **31.03.2022 FR 2202937**
**14.02.2023 FR 2301372**

(43) Date de publication de la demande:
**05.02.2025 Bulletin 2025/06**

(73) Titulaire: **Quandela**
**91300 Massy (FR)**

(72) Inventeurs:
• **BOURDONCLE, Boris**
**75014 Paris (FR)**
• **EMERIAU, Pierre-Emmanuel**
**75018 Paris (FR)**
• **MANSFIELD, Shane**
**75011 Paris (FR)**

(74) Mandataire: **Yes My Patent**
**32 Boulevard Richard Lenoir**
**75011 Paris (FR)**

(56) Documents cités:
**WO-A1-2019/125733 WO-A2-2020/226715**

• **RUTVIJ BHAVSAR ET AL: "Improved device-independent randomness expansion rates from tight bounds on the two sided randomness using CHSH tests", ARXIV.ORG, CORNELL UNIVERSITY LIBRARY, 201 OLIN LIBRARY CORNELL UNIVERSITY ITHACA, NY 14853, 23 May 2021 (2021-05-23), XP081954339**
• **PIRANDOLA S ET AL: "Advances in Quantum Cryptography", ARXIV.ORG, CORNELL UNIVERSITY LIBRARY, 201 OLIN LIBRARY CORNELL UNIVERSITY ITHACA, NY 14853, 4 June 2019 (2019-06-04), XP081373072**
• **CHEN-XI LIU ET AL: "Experimental realization of more quantum randomness generation based on non-projective measurement", JOURNAL OF PHYSICS B, ATOMIC MOLECULAR AND OPTICAL PHYSICS, INSTITUTE OF PHYSICS PUBLISHING, BRISTOL, GB, vol. 52, no. 14, 27 June 2019 (2019-06-27), pages 145501, XP020341581, ISSN: 0953-4075, [retrieved on 20190627], DOI: 10.1088/1361-6455/AB16A4**
• **ARMIN TAVAKOLI ET AL: "Does violation of a Bell inequality always imply quantum advantage in a communication complexity problem?", ARXIV.ORG, CORNELL UNIVERSITY LIBRARY, 201 OLIN LIBRARY CORNELL UNIVERSITY ITHACA, NY 14853, 2 July 2019 (2019-07-02), XP081388578**

- EMANUEL KNILL ET AL: "Quantum Randomness Generation by Probability Estimation with Classical Side Information", ARXIV.ORG, CORNELL UNIVERSITY LIBRARY, 201 OLIN LIBRARY CORNELL UNIVERSITY ITHACA, NY 14853, 18 September 2017 (2017-09-18), XP080817173
- MATAJ PIVOLUSKA ET AL: "Device Independent Random Number Generation", ARXIV.ORG, CORNELL UNIVERSITY LIBRARY, 201 OLIN LIBRARY CORNELL UNIVERSITY ITHACA, NY 14853, 23 February 2015 (2015-02-23), XP081331331, DOI: 10.2478/ASPRT-2014-0006
- MANABENDRA NATH BERA ET AL: "Randomness in Quantum Mechanics: Philosophy, Physics and Technology", ARXIV.ORG, CORNELL UNIVERSITY LIBRARY, 201 OLIN LIBRARY CORNELL UNIVERSITY ITHACA, NY 14853, 7 November 2016 (2016-11-07), XP081363988, DOI: 10.1088/1361-6633/AA8731
- XIAO YUAN: "Interplay between Quantumness, Randomness, and Selftesting", ARXIV.ORG, CORNELL UNIVERSITY LIBRARY, 201 OLIN LIBRARY CORNELL UNIVERSITY ITHACA, NY 14853, 2 March 2017 (2017-03-02), XP080753675
- ANTONIO AC\'IN ET AL: "Certified randomness in quantum physics", ARXIV.ORG, CORNELL UNIVERSITY LIBRARY, 201 OLIN LIBRARY CORNELL UNIVERSITY ITHACA, NY 14853, 1 August 2017 (2017-08-01), XP080950813, DOI: 10.1038/NATURE20119

**Description**

DOMAINE TECHNIQUE DE L'INVENTION

L'invention concerne un procédé de génération et de certification simultanée de nombres aléatoires à l'aide d'un dispositif quantique. L'invention concerne également un système de mise en œuvre de ce procédé.

CONTEXTE DE L'INVENTION

Les nombres aléatoires jouent un rôle clé dans de nombreuses applications, des simulations numériques aux jeux en passant par la cryptographie. Les propriétés attendues d'une source aléatoire dépendent de son objectif, et les standards les plus élevées sont généralement destinées aux applications cryptographiques. Dans ce cas, le terme « aléatoire » fait référence à l'imprévisibilité - aucune information sur la sortie de la source ne peut être obtenue avant sa génération - et à la confidentialité - aucune information sur la sortie ne peut être obtenue par une écoute clandestine, y compris après sa génération. La mécanique quantique nous offre non seulement la possibilité de concevoir des sources répondant à ces critères (voir référence [1]), mais aussi la possibilité d'évaluer la production d'entropie même sans description exacte du fonctionnement interne de la source, grâce à son caractère non local (voir référence [2]) ou, plus généralement, contextuel (voir références [3-5]). En effet, la garantie de l'échantillonnage de certains nombres à partir d'un ensemble contextuel de distributions de probabilité, appelé comportement ou modèle empirique, suffit à certifier qu'ils sont imprévisibles, indépendamment de la description physique du dispositif qui les a produits. Ceci constitue la base de la génération d'aléa indépendante du dispositif (en anglais : device-independent randomness generation DIRG), ou de la génération d'aléa certifiée (voir référence [6]).

Par ailleurs, la capacité supplémentaire de traitement des informations rendue possible par les informations quantiques rend les écoutes clandestines potentielles plus puissantes lorsqu'il s'agit de prédire les résultats d'un processus quantique.

Cela motive le besoin de primitives cryptographiques dont la sécurité est prouvée même en présence d'information auxiliaire quantique (voir référence [7]).

La génération DIRG nous permet de générer des nombres aléatoires avec des dispositifs non caractérisés ou non fiables même en présence d'information auxiliaire quantique, mais ces dispositifs ne sont pas entièrement exempts de pré-requis, car pour garantir qu'un comportement est contextuel, certaines prémisses doivent être vérifiées. En particulier, la (non)contextualité est généralement définie pour les comportements qui respectent la condition généralisée de non-signal (voir référence [3]), qui nécessite que certains ensembles de distributions de probabilité dans le comportement se marginalisent en distributions identiques (nous omettons le terme « généralisé » ci-après). Cette condition est motivée par le principe physique selon lequel les informations ne peuvent pas se propager plus vite que la lumière, et devrait donc être parfaitement satisfaite lorsqu'un test de contextualité est effectué avec plusieurs dispositifs spatialement séparés et utilisés à l'infini, mais elle ne peut pas être satisfaite par une génération DIRG pratique, parce que le comportement est estimé avec des statistiques finies et que la séparation spatiale, bien que réalisable en laboratoire lorsque le but est de démontrer l'existence de corrélations non locales (voir les références [8 - 10]), ne peut pas être une option viable pour un dispositif de traitement d'informations à usage commercial.

Dans ces travaux, nous abordons la question suivante : comment pouvons-nous certifier la génération de caractère aléatoire de manière indépendante du dispositif à l'aide d'un dispositif pratique à petite échelle, où la condition généralisée de non-signal n'est pas remplie, de la diaphonie se produit entre les composants physiques du dispositif ?

Nous notons que la condition de non-signal n'est de toute façon pas vérifiée par les comportements qui sont construits à partir des fréquences observées, même en l'absence de diaphonie, du fait de l'effet de statistiques finies. Il existe des moyens simples de résoudre ce problème (voir référence [11]). Ici, nous étudions le scénario où la signalisation ("signalling" en anglais) n'est pas simplement attribuée à des effets statistiques.

Par rapport à certains travaux antérieurs motivés par la même question (voir référence [12]), et s'appuyant sur des résultats plus récents sur les protocoles indépendants du dispositif en présence d'informations auxiliaires quantiques (voir référence [13]) et sur la relation entre la fraction contextuelle (voir référence [14]) et la fraction de signal (voir référence [15]), nous :

- fournissons des bornes analytiques générales reliant le caractère aléatoire certifiable et le flux d'information entre les composants ;
- proposons une méthode empirique pour évaluer le flux d'information via la fraction de signal et la hiérarchie Navascués-Pironio-Acín (NPA) ;
- utilisons ce rapport entre le caractère aléatoire et la signalisation pour obtenir une borne inférieure sur la min-entropie produite par un protocole DIRG certifié même en présence d'information auxiliaire quantique ;
- mettons en œuvre ce protocole sur une puce photonique et l'exécutons pendant 94.5 h, générant ainsi 7 210 000 bits aléatoires certifiés.

L'état de la technique comprend aussi les références [34]-[42], ainsi que les demandes internationales WO2020/226715 et WO2019/125733.

En particulier, la référence [34] décrit des méthodes d'optimisation numériques pour obtenir des bornes inférieures et supérieures sur l'entropie de Von Neumann pour le jeu CHSH, qui n'est pas utilisé dans le cadre de l'invention. La référence [34] propose aussi trois protocoles modifiés pour la génération et certification d'aléa basée sur le jeu CHSH : le premier utilise un générateur de nombre aléatoire central et deux générateurs de nombres aléatoires locaux ; le deuxième utilise deux générateurs de nombres aléatoires locaux ; le troisième recycle une partie de l'aléa nécessaire en entrée. Ces trois approches sont bien différentes de l'invention, et ne concernent pas la présence de diaphonie / interférences non désirées.

RÉSUMÉ DE L'INVENTION

Le but de l'invention est de proposer un procédé et un système améliorés pour la certification de la génération de nombres aléatoires quantiques.

À cet effet, l'invention concerne un procédé de génération et de certification simultanées de nombres aléatoires à l'aide d'un dispositif quantique D, tel que défini par la revendication 1.

Grâce à l'invention, nous pouvons quantifier et prendre en compte les imperfections du dispositif physique, montrant que la sécurité peut être rétablie si les imperfections se situent dans nos seuils calculés.

En particulier, l'invention permet de mettre en œuvre un générateur de nombres aléatoires quantiques certifié sur un seul petit dispositif photonique.

Les nombres aléatoires sont une ressource indispensable pour, entre autres : les jeux, les paris, les simulations numériques, l'échantillonnage statistique et les protocoles cryptographiques. Selon l'application considérée, différentes normes de sécurité peuvent être nécessaires.

L'invention atteint le niveau le plus sécurisé, car elle est indépendante du dispositif ('device-independent' en anglais) et sécurisée contre les écoutes clandestines potentielles les plus puissantes. En tant que telle, elle peut être utilisée pour n'importe laquelle de ces applications. Il faut cependant garder à l'esprit qu'elle se réalise au prix taux de génération d'aléa moindre. Pour une utilisation nécessitant un caractère aléatoire faible mais rapide, d'autres méthodes devraient être plus appropriées.

Notre protocole et sa mise en œuvre pourraient être utilisés pour fournir des nombres aléatoires basés sur le cloud à des utilisateurs distants. Dans ce cas, la sécurité de la séquence sera limitée par la sécurité de la connexion entre le dispositif et l'utilisateur. Le dispositif peut également être intégré dans d'autres dispositifs grâce à sa petite taille.

Pour certaines applications, la mise en œuvre nécessite un cryostat externe, car certains composants nécessitent une température de 4 K pour fonctionner. Ainsi, le besoin de cryostats rend le dispositif plus adapté à une utilisation en combinaison avec d'autres dispositifs nécessitant une température froide.

L'invention permet d'améliorer un protocole existant pour certifier qu'une séquence de nombres est produite de manière imprévisible. Le protocole est basé sur la contextualité quantique sur une puce photonique. Cependant, l'invention peut également s'intégrer plus généralement dans tout autre protocole de certification de caractère aléatoire quantique basé sur la violation d'inégalités de Bell . Elle permet à l'utilisateur de prendre en compte les imperfections inhérentes à toute mise en œuvre physique d'un tel protocole. Ces imperfections constitueraient des failles de sécurité pour les méthodes de certification préexistantes.

Selon d'autres aspects avantageux mais non obligatoires de l'invention, un tel procédé peut incorporer une ou plusieurs des caractéristiques suivantes :

- Le jeu non local est le jeu CHSH, qui est tel que n = 4 et k = 3.

L'invention concerne également un système de mise en œuvre de ce procédé, comprenant un dispositif quantique.

Selon d'autres aspects avantageux mais non obligatoires de l'invention, un tel système peut incorporer une ou plusieurs des caractéristiques suivantes :

- Le système comprend une source de photons uniques basé sur une boîte quantique ('quantum dot' en anglais).
- Le système comprend une puce photonique.
- La puce photonique comprend des séparateurs de faisceau et des déphaseurs thermo-optiques, et les entrées du dispositif quantique D correspondent au choix des paramètres des déphaseurs.
- Le système comprend des détecteurs de photons, et les sorties du dispositif quantique D correspondent à des événements de détection de photons.

- Le système comprend un logiciel de service cryptographique intégrant une interface utilisateur et un module de traitement de données. L'interface utilisateur est configurée pour recevoir une requête d'un utilisateur pour obtenir une clé cryptographique et transmettre une clé cryptographique cryptée au client. Le module de traitement de données est en communication avec le dispositif quantique D, configuré pour transmettre une requête au dispositif quantique D pour recevoir une séquence de bits aléatoire, puis tester la séquence de bits pour certifier le fait que la séquence de bits contient une entropie minimale positive même en présence d'information auxiliaire quantique, puis en cas de validation du test, générer une clé cryptographique cryptée à partir de la séquence de bits, puis transmettre la clé cryptographique cryptée à l'utilisateur via l'interface utilisateur.

- Le système comprend un module de stockage de séquences de bits contenant une entropie minimale positive même en présence d'information auxiliaire quantique, précédemment certifiées grâce au dispositif quantique D.

## DESCRIPTION BRÈVE DES DESSINS

L'invention sera maintenant expliquée en correspondance avec les figures annexées, et à titre illustratif, sans restreindre l'objet de l'invention. Dans les figures annexées :

[Fig. 1] est une représentation schématique d'un protocole DIRG suivi d'une extraction d'aléa.

[Fig. 2] est une formule montrant la borne inférieure sur la min-entropie des sorties de notre protocole, lorsque ce protocole réussit.

[Fig. 3] est une représentation détaillée du système expérimental, comprenant un laser de pompe, une source de photons uniques et une puce photonique (puce QRNG).

[Fig. 4] est une représentation schématique du système expérimental, permettant d'effectuer le test de Bell photonique sur puce avec boucle de rétroaction.

[Fig. 5] est une représentation schématique de l'étalonnage requis avant l'exécution du protocole de génération aléatoire.

[Fig. 6] est une représentation schématique de l'exécution du protocole de génération aléatoire.

[Fig. 7] est un organigramme de la mise en œuvre expérimentale du protocole de vérification ponctuelle QRNG.

## DESCRIPTION DETAILLEE DE QUELQUES MODES DE REALISATION

### SECTION I. BORNE INFÉRIEURE POUR LA MIN-ENTROPIE DES JEUX CONTEXTUELS RÉALISTES

Dans cette section, nous fournissons le cadre théorique que nous utilisons pour certifier le caractère aléatoire basé sur des corrélations contextuelles sans séparation spatiale. Après avoir défini le cadre, nous montrons comment dériver une relation générale entre la quantité de communication et la quantité d'aléa. Nous expliquons ensuite comment la quantité de communication peut être estimée et montrons comment utiliser cette relation dans un protocole de génération aléatoire indépendante du dispositif dérivé par Miller et Shi (voir référence [13]).

### Paramètres pour DIRG basé sur la contextualité

Le scénario minimal pour observer la non localité est le suivant : deux agents (fictifs), Alice et Bob, effectuent chacun des mesures respectivement étiquetées $x \in X$ et $y \in Y$ sur une particule et obtiennent des résultats de mesure respectivement étiquetés $a \in A$ et $b \in B$. Si les corrélations entre les sorties de mesure conditionnées aux choix de mesure, décrites par les distributions conditionnelles $e\_xy$ sur $A \times B$, respectent les conditions de non-signal de [Math 1] ci-dessous et sont non locales, le ou les agents peuvent en déduire certaines propriétés sur les mesures et sur les particules qui sont valables même si les systèmes sous-jacents n'ont pas été correctement ou entièrement caractérisés.

[Math 1]

$$\forall x, x', y, e_{xy \lor y} = e_{x'y \lor y}$$
$$\forall x, x, y', e_{xy \lor x} = e_{xy' \lor x} \tag{1}$$

Dans le langage plus général de la contextualité, cette configuration est décrite par un scénario de mesure $\langle Z, M, O \rangle$, où $Z$ représente l'ensemble des mesures pouvant être effectuées par le ou les agents , $M$ représente l'ensemble des contextes et $O$ représente l'ensemble des résultats de mesure possibles. Un contexte $C \in M$ est un sous-ensemble de $Z$ composé de mesures compatibles, c'est-à-dire de mesures pouvant être effectuées conjointement. Dans notre cas, la paire de mesures pour un contexte donné peut ne pas être parfaitement compatible à cause de la diaphonie. Nous définissons quand même les mêmes contextes que dans le scénario idéal, c'est-à-dire sans diaphonie, et nous tenons compte de l'imperfection au niveau du comportement. Cela signifie que des ensembles de mesures « compatibles » (dans notre définition) peuvent entraîner des comportements qui ne sont pas compatibles, c'est-à-dire qui ne respectent pas la condition de non-signal.

Une instance spécifique du scénario est décrite de manière similaire par un comportement $\{e_C\}_C$ et les conditions de non-signal se généralisent par contexte (voir par ex. la référence [14]). Par exemple, le scénario Clauser-Horne-Shimony-Holt (CHSH) (voir référence [16]) que nous mettons en œuvre dans la section II peut être décrit comme suit :

$$Z = \{x_1, x_2, y_1, y_2\}, \tag{2}$$

$$M = \{\{x_1, y_1\}, \{x_1, y_2\}, \{x_2, y_1\}, \{x_2, y_2\}\}, \tag{3}$$

$$O = \{0, 1\}. \tag{4}$$

Si un comportement e satisfait les conditions de non-signal, nous écrivons $e \in NS$; La fraction contextuelle CF définie dans [14] est un programme linéaire qui caractérise la contextualité : si $e \in NS,$ e est contextuel si et seulement si $CF(e) > 0$.

Score maximal dans des jeux contextuels réalistes

Un test de Bell, ou jeu non local, associé à un scénario non local donné est caractérisé par une distribution p(x, y) et une fonction de score $V : (A, B, X, Y) \rightarrow \{0, 1\}$ : en recevant les questions x et y, distribuées selon p(x, y) et qui définissent ensemble une formule propositionnelle, Alice et Bob donnent les réponses a et b, qui constituent une affectation pour la formule, et ils gagnent si la formule est satisfaite ; ce qui correspond à V (a, b, x, y) = 1. Par exemple, la fonction de score du jeu CHSH est :

$$V (a, b, x, y) = 1 \text{ si } a \oplus b = x \cdot y, \tag{5}$$

0 sinon.

La formulation générale d'un jeu associé à un scénario de contextualité se trouve dans la référence [14], annexe E. Dans la suite de cette description, nous utiliserons indifféremment les termes « test de Bell » et « jeu non local/contextuel ». Le score atteint par un comportement pour un jeu donné est donc :

[Math 6]

$$p \cdot V \cdot e = \sum_{a,b,x,y}^{\square} p (x, y) V(a, b, x, y) e_{xy}(a, b) \tag{6}$$

Nous définissons, comme dans la référence [13] :
[Math 7]

$$C = \underset{e}{maximum} \, p \cdot V \cdot e, \\ s.t. \, CF(e) = 0. \tag{7}$$

qui est le score maximum pouvant être atteint par un comportement local ou non contextuel et
[Math 8]

$$W_{\bar{x},\bar{y}} = \underset{e}{maximum} \, p \cdot V \cdot e, \\ s.t. \, e \in NS, \\ \exists \left(\bar{a}, \bar{b}\right), e_{\bar{x},\bar{y}} \left(\bar{a}, \bar{b}\right) = 1. \tag{8}$$

qui est le score maximum pouvant être atteint par un comportement sans signal déterministe sur la paire d'entrées $(\bar{x}, \bar{y})$,

appelée « paire d'entrée singularisée». Suivant la référence [17], nous appelons n le nombre de formules propositionnelles (qui est égal à $|X| \times |Y|$, ou plus généralement à $|M|$) et k la cohérence du jeu, c'est-à-dire le nombre maximum de formules qui ont une attribution satisfaisante conjointe. Pour le jeu CHSH, C = 0,75, n = 4 et k = 3.

Afin de prendre en compte des jeux réalistes où les conditions de non-signal ne sont pas satisfaites, nous modifions les programmes C et $W_{x,y}^{--}$ en prenant en compte une quantité $\sigma \in [0, 1]$ que nous appellerons paramètre de dépendance. Soit :
[Math 9]

$$S_{cl}{}^{\sigma} = \max_{e} ip \cdot V \cdot e,$$
$$s.t.\, CF(e) \leqslant \sigma \tag{9}$$

et : [Math 10]

$$S_{x,y}^{\sigma} = \max_{e} ip \cdot V \cdot e,$$
$$s.t.\, SF(e) \leq \sigma,$$
$$\exists \left(\bar{a}, \bar{b}\right), e_{x,y}^{--}\left(\bar{a}, \bar{b}\right) = 1. \tag{10}$$

Nous pouvons maintenant dériver une borne supérieure sur ces quantités qui nous permettra de certifier la génération de caractères aléatoires intrinsèques dans un jeu contextuel.

Proposition 1. Soit p et V une distribution sur les entrées et une fonction de score pour un jeu contextuel k-cohérent. Alors :
[Math 11]

$$S_{cl}{}^{\sigma} \leqslant \frac{k + \sigma(|M| - k)}{|M|} \tag{11}$$

Proposition 2. Soit p et V une distribution sur les entrées et une fonction de score pour un jeu contextuel à n joueurs avec entrées binaires. Alors :
[Math 12]

$$S_{x,y}^{\sigma} \leq S_{cl}{}^{\sigma} \tag{12}$$

I.C. Choix du paramètre de dépendance

Dans l'approche indépendante du dispositif, l'élément clé pour examiner le caractère aléatoire intrinsèque associé à un comportement e pour un scénario de mesure donné sont ses décompositions acceptables en modèle à variables cachées (HVM). Un HVM pour e est décrit par un ensemble de variables cachées $\{\lambda\} \in A$ distribué selon une distribution $p(\lambda)$, et par les comportements associés $\{h\lambda\}$, qui sont définis pour le même scénario de mesure. Le comportement e est dit réalisable par le HVM si
[Math 13]

$$e = \sum_{\lambda}^{\square} p\left(\lambda\right) h^{\lambda} \tag{13}$$

De plus, on dit que le HVM est acceptable si les $\{h^{\lambda}\}$ sont considérés comme admissibles selon notre description du scénario. Par exemple, si une expérience est réalisée de manière séparée dans l'espace, les $\{h^{\lambda}\}$ doivent chacun appartenir à NS ; si nous supposons la validité de la mécanique quantique, les $\{h^{\lambda}\}$ devraient avoir une description quantique. Nous affirmons qu'un HVM a un paramètre de dépendance $\sigma$ si :
[Math 14]

$$\forall \lambda, \exists h_{NS}^{\lambda} \in NS, \exists c_{NS}^{\lambda} \geq 1 - \sigma,$$
$$h^{\lambda} = c_{NS}^{\lambda} h_{NS}^{\lambda} + \left(1 - c_{NS}^{\lambda}\right) h^{\lambda\prime}. \tag{14}$$

Sur le plan opérationnel, nous pouvons considérer le HVM comme la description la plus précise du ou des dispositifs qu'une personne tierce pourrait avoir. En particulier, cette description pourrait être plus précise que la description connue des utilisateurs. Garantir une borne inférieure sur le caractère aléatoire produit dans une expérience de Bell revient donc à trouver le pire HVM pour les utilisateurs, c'est-à-dire le HVM le plus favorable pour une personne tierce, c'est-à-dire celui qui lui donne le plus grand pouvoir de prédiction.

Dans la mise en œuvre que nous décrivons dans la section II ci-après, nous supposons que l'expérience obéit aux lois de la mécanique quantique, mais qu'une certaine quantité d'informations peut circuler du sous-système A vers le sous-système B, et vice versa, à cause de la diaphonie entre les composants. Cela signifie que les HVM acceptables doivent être quantiques mais peuvent avoir un paramètre de dépendance $\sigma$, pour un $\sigma$ qui peut être caractérisé de deux manières :

(i) par une caractérisation partielle en amont des dispositifs qui permet aux utilisateurs de supposer une certaine limite sur le flux d'informations entre les composants ;
(ii) par une estimation à la volée basée sur les statistiques des entrées et des sorties recueillies lors du test de Bell.

L'approche (i) rend le protocole semi-dépendant du dispositif, car une certaine description des dispositifs est nécessaire. L'approche (ii) est plus proche de l'indépendance des dispositifs,car les informations sont dérivées des statistiques de l'interaction de l'utilisateur avec les dispositifs uniquement. Elle nécessite cependant encore une hypothèse cruciale : que le paramètre de dépendance observé sur le comportement estimé reflète la dépendance de paramètres se produisant au niveau des HVM, ou du moins qu'ils soient connectés (nous pourrions par exemple accepter tous les HVM avec un paramètre de dépendance deux fois plus grand que celui observé empiriquement). Des observations similaires sur la relation entre les paramètres qui sont observés au niveau empirique et les paramètres qui sont acceptés au niveau HV, et sur l'exigence des dispositifs pour qu'une telle relation soit valide, ont été faites par exemple dans les références [12, 18].

Nous suivons l'approche (ii) ici et associons $\sigma$ à la fraction de signal observée au niveau empirique. Nous appelons SF$\ell$ la distance entre le comportement estimé ê et l'ensemble quantique pour notre scénario de mesure, que nous approximons au $\ell^{e}$ niveau de la hiérarchie Navascues-Pironio-Acín (NPA) (références [19, 20]) :
[Math 15]

$$SFl = \min_{s} 1 - s$$
$$s.t. \exists e' \in NS, \exists e'' \in E, \hat{e} = s \cdot e' + (1 - s) \cdot e'' \tag{15}$$
$$e' \in NPA_{l}.$$

Lorsque $\ell = 0$, SF$\ell$ est égal à la fraction de signal SF, SF$\ell$ augmente avec $\ell$, par définition, $\sigma \geq$ SF, et $\sigma \geq$ SF$\ell$ pour tout $\ell$ si nous supposons que la mécanique quantique est valide. Ici, nous choisissons de prendre

$$\sigma = SF\ell \tag{16}$$

pour un certain $\ell$, et nous fixons $\ell = 3$ dans la section II.

Protocole DIRG avec un dispositif de petite taille

Être capable d'associer le score dans un jeu contextuel à une quantité d'aléa est la question centrale de l'approche DIRG. Un test de Bell nécessite de sélectionner des bases de mesure aléatoirement afin d'obtenir des résultats de mesure aléatoires, de sorte que, dans le cadre DI, produire des nombres aléatoires nécessite d'utiliser des nombres aléatoires. Cependant, les caractères aléatoires des entrées et des sorties sont de natures différentes : les premiers peuvent être produits publiquement, tandis que les seconds restent privés. Pour cette raison, nous pouvons parler de «génération aléatoire ». Nous pouvons également comparer la quantité de caractères aléatoires dans l'entrée et dans la sortie, auquel cas nous utiliserions le terme « expansion du caractère aléatoire » (DIRE). Voir la référence [21] où cet argument a été formulé pour la première fois.

Il existe différentes manières de définir des fonctions qui associent un tel score à la quantité d'aléa contenue dans les sorties, appelées probabilité de deviner (références [22, 23]), courbe de taux (référence [13]) ou fonctions de compromis min (référence 24]). Une fois qu'un protocole de DIRG a été défini, une preuve de sécurité doit être dérivée, qui fournit une borne inférieure sur la min-entropie des sorties conditionnées aux entrées ainsi qu'à toute information potentiellement disponible à une tierce personne(voir la référence [25] pour les définitions de la min-entropie conditionnée à de l'information quantique et de sa version lissée). Ces informations dites auxiliaires peuvent se limiter à des informations classiques ou être des informations quantiques.

Dans ce travail, nous adaptons le protocole de génération/ d'expansion aléatoire décrit dans la référence [13], dont la preuve de sécurité est valide même en présence d'information auxiliaire quantique et peut être utilisée à la fois pour les jeux non locaux et contextuels. La borne inférieure sur la min-entropie nous permet donc d'utiliser un extracteur d'aléa, qui, dans notre cas, devrait être valide contre l'information auxiliaire quantique (références [26, 27]), car la borne détermine approximativement le nombre de bits uniformément aléatoires et non corrélés à l'information auxiliaire détenue par une tierce personne pouvant être extraits des sorties (référence [22]).

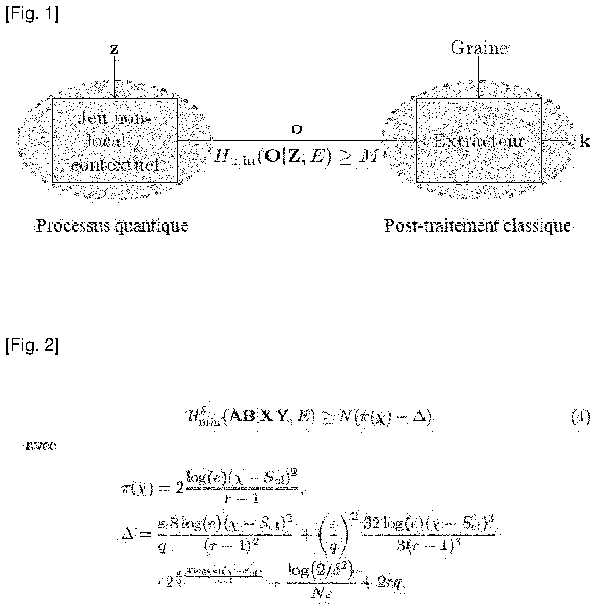

La figure 1 décrit l'ensemble du processus. Un protocole DIRG suivi d'une extraction aléatoire. Le jeu se joue avec des entrées z et produit des sorties o. L'entropie min de O conditionnée au niveau de l'entrée et toute information annexe quantique potentielle disponible pour une écoute clandestine est limitée par l'intermédiaire de la preuve de sécurité ; ce qui nous permet d'utiliser des extracteurs de caractères aléatoires à l'épreuve quantique pour extraire une clé presque parfaite k dont la longueur est à peu près égale à M.

La modification que nous introduisons affecte la borne inférieure sur la min-entropie : grâce aux propositions 1 et 2, l'atteinte d'un score W lors du jeu avec la dépendance de paramètres $\sigma$ équivaut à l'obtention d'un score W-$\sigma(2^n-k)$ lors de la lecture avec une indépendance totale de paramètres.

Cela se reflète dans le protocole modifié décrit ci-après, adapté à partir de la référence [13]. Ce protocole est valable pour tout $\chi \geq W^{- -}_{x,y}$ .

Arguments :

G : Un jeu non-local avec entrées binaires et une entrée singularisée C
N : Un entier positif (la longueur de la sortie)
q : Un entier positif de l'intervalle [0, 1] (la probabilit'e de test)
$\chi$ : Un entier positif de l'intervalle [0, 1] (le seuil du score)
l : Un entier positif (le niveau de la hiérarchie NPA)

Protocole :

1. Soit c une variable réelle initialisée à 0, soit ê un tableau bi-dimensionnel indexé par les valeurs possibles d'entrées et de sorties dont toutes les cellules sont initialisées à 0.
2. Choisir un bit $t \in \{0, 1\}$ selon la distribution (1-q, q).
3. Si t = 1 ("tour de jeu"), jouer à G, enregistrer l'entrée et la sortie dans ê, ajouter le score obtenu à c.
4. Si t = 0 ("tour de génération"), entrer C et enregistrer la sortie.
5. Les étapes 2 à 4 sont répétées (N-1) fois.
6. Calculer SF_l(ê).
7. Si c/(qN) - 2SF_l(ê)(|M|-k) < $\chi$, le protocole échoue. Sinon, il réussit.

La figure 2 montre la borne inférieure de l'entropie min des sorties de notre protocole (Éq. 17) qui est garantie lorsque le protocole réussit, qui est valable pour tout $\varepsilon \in [0, 1]$. Nous utilisons la dérivation de la référence [18], annexe G, pour obtenir des valeurs analytiques pour la notation asymptotique du théorème 6.9 dans la référence [13].

Comme la borne est non décroissante en $\chi$, il est clair que, pour générer le plus de caractères aléatoires possible, $\chi$ doit être aussi grand que possible, tout en satisfaisant
[Math 18]

$$\chi \leq \frac{c}{qN} - SFl\frac{(2^n-k)}{2^n} \qquad (18)$$

pour que le protocole n'échoue pas. En pratique, nous prenons donc l'égalité dans l'Éq. (18).

SECTION II. MISE EN ŒUVRE EXPÉRIMENTALE

Nous mettons en œuvre le protocole de vérification ponctuelle QRNG à l'aide d'une puce photonique comprenant deux qubits photoniques encodés par double rail. Le protocole est réalisé à l'aide de photons uniques générés par une boite quantique semiconductrice.

II.A. Configuration expérimentale

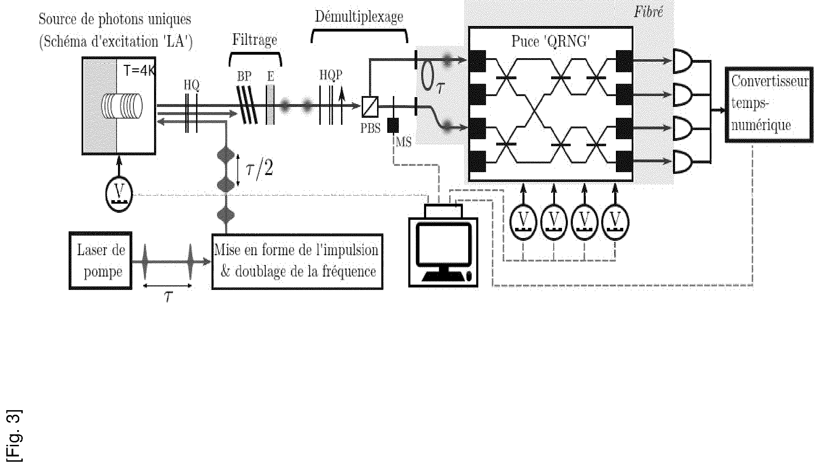

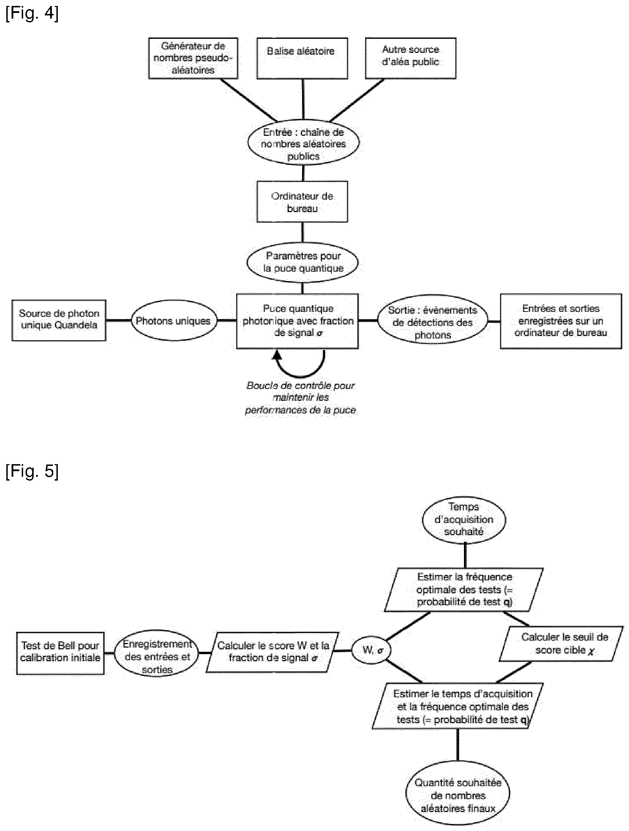

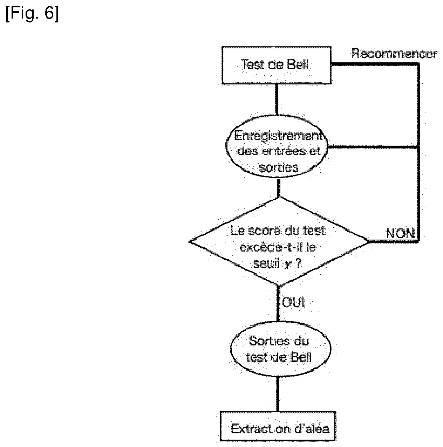

La figure 3 présente une représentation détaillée du système expérimental 1, tandis que la figure 4 présente une représentation simplifiée de celui-ci. La figure 5 montre l'étalonnage requis avant l'exécution du protocole. La figure 6 montre le protocole de génération aléatoire lui-même.

Sur la figure 3, le système 1 comprend un laser de pompe, deux lames de quart d'onde Q, deux lames de demi-onde H, un polariseur P, un séparateur de faisceau polarisant PBS, un obturateur motorisé MS, des filtres passe-bande BP.

Le laser de pompe femtoseconde avec une fréquence d'impulsion $1/\tau \approx 79$ MHz est formé avec une configuration de filtrage spectral 4f autour de 924 nm à une largeur spectrale de $\Delta\omega$. La fréquence des impulsions est ensuite doublée et envoyée à l'émetteur de photons unique. La polarisation d'excitation est contrôlée avec les premiers H et Q. Les photons uniques émis et la pompe résiduelle sont envoyés vers un étage de filtrage constitué de trois filtres passe-bande BP, rejetant la pompe résiduelle et transmettant les photons uniques. Le train de photons résultant est envoyé vers PBS servant de séparateur de faisceau symétrique grâce aux seconds Q et H et au polariseur P. Les sorties du PBS sont envoyées vers des collimateurs et la configuration est par la suite entièrement fibrée. L'une de ces sorties introduit un retard fibré $\tau$, qui permet de synchroniser les photons entrant dans la puce QRNG. Les sorties de la puce sont connectées au SNSPD et les temps d'arrivée des photons sont traités par un module d'étiquetage temporel. Les lignes grises en pointillés indiquent que les éléments de la configuration sont automatisés pour mettre en œuvre le protocole QRNG.

Des photons uniques à 925,16 nm sont générés par une source de photons uniques Quandela reposant sur un point quantique InAs intégré dans une cavité. Une tension de l'ordre de -1,5 V est appliquée au point, de sorte que la raie d'émission soit en résonance avec la cavité. La source est pompée en utilisant le schéma d'excitation assistée par phonon acoustique longitudinal (voir références [28-31]) à environ 924 nm et une largeur spectrale de 0,6 nm. La pompe est un laser femtoseconde à verrouillage de mode avec un taux de répétition de 79,08 MHz, correspondant à une durée $\tau \approx 12,6$ ns entre deux impulsions consécutives. Les impulsions sont ensuite mises en forme avec une configuration de filtrage spectral 4f pour assurer un pompage étroit optimal de la source.

Pour augmenter la fréquence finale de l'expérience, la fréquence d'impulsions est doublée à l'aide d'un interféromètre Mach-Zehnder (MZI) fibré avec une ligne à retard d'environ $\tau/2$ sur un bras. Les impulsions d'excitation sont ensuite envoyées à la source de photons. Les photons uniques et la pompe résiduelle sont envoyés à une étape de filtrage composée de trois filtres passe-bande en guirlande et d'un étalon Fabry-Perot (FSR 204 pm et finesse 14 à 925 nm, $59 \pm 1$ % de transmission de photon unique, utilisés pour l'amélioration de la pureté de la source).

La luminosité de la première lentille polarisée de notre source à photon unique s'élève à $24,7 \pm 1,3$ % et la luminosité du dispositif polarisé après l'étape de filtrage est mesurée à $8,3 \pm 0,8$ % ; ce qui correspond à une sortie de $13,0 \pm 0,1 \times 10^6$ photons polarisés par seconde. Nous mesurons la pureté du photon unique $g^{(2)}(0)$ en envoyant le photon unique après l'étape de filtrage à un séparateur de faisceau 50:50, dont les sorties sont couplées à des détecteurs, et en enregistrant l'histogramme des arrivées simultanées de photons (coïncidences) au niveau des deux sorties (voir référence [32]). La pureté avec l'étalon est $g^{(2)}(0) \approx 2,31 \pm 0,03$ % (brute, pas de correction de ligne de base).

Nous mesurons également l'indiscernabilité des photons en faisant d'abord chevaucher temporellement des photons successifs à l'aide d'un séparateur de faisceau polarisant en espace libre et d'une ligne à retard, puis en les injectant sur un séparateur de faisceau 50:50, dont les sorties sont couplées à des détecteurs, et en enregistrant l'histogramme des coïncidences au niveau des deux sorties. La visibilité de Hong-Ou-Mandel est de $93,09 \pm 0,04$ %, et en corrigeant par la pureté du photon, l'indiscernabilité du photon unique s'élève à $97,65 \pm 0,06$ % (voir référence [33]).

Afin d'injecter deux photons uniques simultanément dans la puce QRNG, nous utilisons une configuration de démultiplexage spatial probabiliste ($80 \pm 1$ % de transmission). Les photons uniques sont divisés en deux chemins avec une probabilité de 50:50, dont l'un comporte une ligne à retard $\tau$, assurant ainsi le chevauchement temporel au niveau du circuit photonique de deux photons uniques séparés par $\tau$. Le chevauchement temporel est réussi lorsque le premier photon entre dans le long chemin et le second photon dans le court. L'indiscernabilité du degré de liberté de polarisation est assurée à l'aide de contrôleurs de polarisation fibrés sur chacun des deux chemins. La puce QRNG en verre de silice comprend des guides d'ondes écrits au laser et quatre déphaseurs thermo-optiques configurables (voir la section suivante pour les détails et le fonctionnement). La transmission optique de la puce est de $58 \pm 1$ % (moyenne au niveau des deux entrées utilisées). Sa sortie est envoyée à un détecteur de photon unique à nanofil supraconducteur (SNSPD, efficacité de détection de 70 %). Les temps d'arrivée des photons sont traités par un module de marquage temporel.

Par conséquent, la transmission totale de la configuration de la source aux détecteurs est de 2,7 % (luminosité de la source et efficacité des détecteurs incluses).

II.B. Puce QRNG

La puce QRNG utilise deux qubits codés à double rail : les modes $0_A$ et $1_A$ (2 entrées et sorties supérieures : 1 et 2) font référence au premier qubit nommé « Alice » (A), les modes $0_B$ et $1_B$ (2 entrées et sorties inférieures : 3 et 4) font référence au second, nommé « Bob » (B). La puce connecte en guirlande 2 fonctions. La première partie de la puce génère un état intriqué.

Deux photons arrivant en même temps au niveau des entrées 1 et 3 initialisent la puce à l'état $|0_A, 0_B\rangle$. L'état quantique s'écrit $|0_A, 1_B\rangle + |1_A, 0_B\rangle + |0_A, 1_A\rangle + |0_B, 1_B\rangle$, mais en post-sélectionnant au niveau des détections simultanées de photons d'Alice et de Bob, cet état est projeté à l'état de Bell $|0_A, 1_B\rangle + |1_A, 0_B\rangle$. Ainsi, la puce génère l'état intriqué $|0_A, 1_B\rangle + |1_A, 0_B\rangle$ avec la probabilité 1/2.

La partie aval de la puce permet à Alice et à Bob d'appliquer des opérations locales sur leur qubit respectif. En pratique, ceci est réalisé en appliquant des tensions sur des résistances chauffantes se trouvant sur la puce, jouant ainsi le rôle de déphaseurs thermo-optiques. Ils correspondent à une rotation autour de l'axe z dans la sphère de Bloch, suivie d'une rotation autour de l'axe y, le tout avec des angles de rotation configurables (mais des axes de rotation fixes). Nous notons les phases d'Alice par $\phi_Z^{(A)}$ and $\phi_Y^{(A)}$, et les phases de Bob par $\phi_Z^{(B)}$ and $\phi_Y^{(B)}$.

La chaleur produite par les résistances chauffantes d'Alice et de Bob se propage dans la puce. L'injection d'une diode laser continue dans la puce et la mesure des sorties à l'aide des photodiodes révèlent qu'il n'y a pas de diaphonie thermique mesurable entre les portes Z et Y, seulement entre les portes Z et entre les portes Y elles-mêmes.

II.C. Mise en œuvre expérimentale du protocole de vérification ponctuelle QRNG.

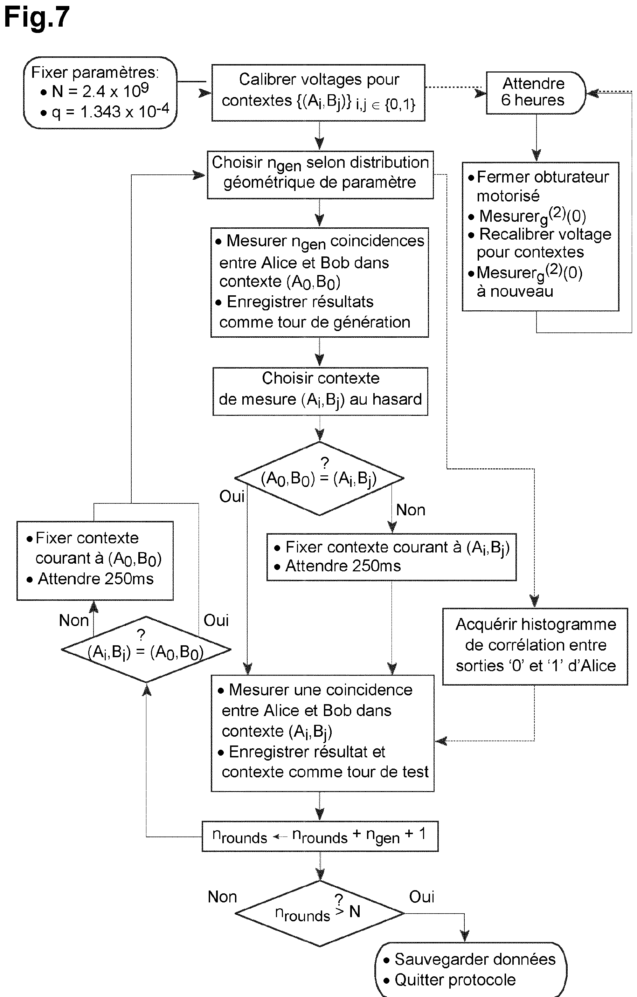

La figure 7 est un organigramme de la mise en œuvre expérimentale du protocole de vérification ponctuelle QRNG. Les flèches continues représentent les actions effectuées au premier plan et les pointillées représentent les actions d'arrière-plan. Les principaux paramètres sont : N, le nombre de tours à effectuer, et q, la probabilité du test. Le protocole entre ensuite dans la boucle principale), qui comprend deux étapes : des tours de génération et un tour de test. Le nombre de tours de génération à acquérir à chaque itération de la boucle principale est déterminé par une distribution de probabilités géométriques du paramètre q. Chaque tour de génération consiste à mesurer une coïncidence entre Alice et Bob dans le contexte de génération $(A_0, B_0)$, dont les résultats sont ensuite stockés. Une fois tous les tours de génération effectués, un contexte est choisi de manière aléatoire parmi $(A_0, B_0)$, $(A_0, B_1)$, $(A_1, B_0)$ et $(A_1, B_1)$, et une coïncidence est mesurée entre Alice et Bob dans ce nouveau contexte. Le résultat et le contexte de mesure sont stockés. À chaque changement de contexte de mesure, le protocole attend 250 ms pour que la stabilisation thermique soit atteinte. Lorsque le nombre de tours effectués nrounds (la somme de tous les tours de génération et de test jusqu'à présent) a atteint N, le protocole quitte la boucle principale et enregistre les données. Parallèlement aux cycles de génération, au fur et à mesure que l'interféromètre d'Alice forme un séparateur de faisceau 50:50, l'histogramme de corrélation temporelle des sorties d'Alice est enregistré et utilisé pour évaluer la visibilité HOM au fur et à mesure que le protocole progresse (zone de gauche). Toutes les 6 heures, les tensions utilisées pour mettre en œuvre les contextes sont réétalonnées (zone de droite). Pendant cette opération, le protocole est interrompu et le $g^{(2)}(0)$ est également mesuré.

Alice (resp. Bob) mesure 0 lorsqu'un photon est détecté dans le mode $0_A$ (resp. $0_B$), et 1 lorsqu'un photon est détecté dans le mode $1_A$ (resp. $1_B$). Une « coïncidence » entre Alice et Bob est une détection simultanée de photons par Alice et Bob.

Le protocole alterne entre des tours de génération et des tours de test. Un tour comprend la mesure d'une coïncidence, dont le résultat est stocké sous la forme 00, 01, 10 ou 11, où le premier bit décrit le résultat d'Alice et le second celui de Bob. Le protocole produit trois séquences binaires : les résultats du tour de génération, les résultats du tour de test et les contextes du tour de test. La chaîne binaire des résultats du cycle de génération représente la séquence de bits aléatoires avant l'extraction du caractère aléatoire. Les résultats et les contextes du tour de test sont utilisés pour remplir le modèle empirique de l'expérience. À partir de là, nous pouvons calculer le score CHSH et la fraction de signal.

Le contexte $(A_0, B_0)$ a été utilisé pour les tours de génération. Il permet d'acquérir la visibilité HOM en parallèle, car la porte Y d'Alice sert de séparateur de faisceau symétrique dans cette configuration. Notez que pendant l'expérience, $\phi z^{(A)} = \phi z^{(B)} = 0$.

Une dérive de l'ordre de 0,25 mrad/h est observée pour $\phi_Y^{(A)}$ et $\phi_Y^{(B)}$ en utilisant les mêmes tensions, donc les tensions que nous utilisons pour mettre en œuvre les phases correspondantes pour chaque contexte de mesure avec les résistances chauffantes sont calculées au début de l'acquisition du nombre aléatoire, puis pendant toutes les 6 heures de fonctionnement. En conséquence, les phases sont restées confinées dans un intervalle de 3 mrad autour des phases cibles pendant une durée de près de 100 heures.

Le taux de coïncidence prévu entre Alice et Bob est le suivant :

$$158 \times 10^6 \qquad \text{(taux de création de photons)}$$

(suite)

| | |
|---|---|
| $\times (0{,}0266)^2$ | (transmission de configuration totale) |
| $\times 1/4$ | (chevauchement temporel) |
| $\times 1/2$ | (post-sélection de l'état) |
| $= 14\,000 \pm 300\ s^{-1}$ | |

Le taux de coïncidence mesuré est d'environ $14\,200 \pm 600\ s^{-1}$. Compte tenu du temps d'attente, le taux de traitement des tours de protocole attendu à partir du taux de coïncidence mesuré est d'environ $7\,300 \pm 300\ s^{-1}$ ; ce qui est en bon accord avec le taux mesuré de $7\,300\ s^{-1}$.

II.D. Résultats expérimentaux

Nous enregistrons une acquisition de $2{,}4 \times 10^9$ tours en une seule passe de 94,5 h en suivant le protocole de vérification ponctuelle. La probabilité de test étant de $1{,}343 \times 10^{-4}$, le nombre de tours de test effectués est de 322 794. Le score du jeu CHSH calculé à partir des tours de test est de 2,685 et la fraction de signal est de 0,5 % ; ce qui nous a permis d'extraire $7{,}21 \times 10^6$ bits aléatoires à l'aide de l'extracteur de hachage aléatoire de la matrice Toeplitz. Pour cette expérience, le taux de génération est donc de 21,2 bits/s.

CONCLUSIONS

Les corrélations non locales ou contextuelles sont intrinsèquement non-déterministes et peuvent donc être utilisées pour générer des nombres aléatoires de manière certifiée, c'est-à-dire même à l'aide d'un dispositif non fiable. Il peut toutefois exister un décalage entre les exigences imposées au dispositif (comme, dans le cas d'un test de Bell, l'absence de flux d'informations entre les parties concernées) et sa mise en œuvre expérimentale.

Dans le cadre de l'invention, nous utilisons une relation qui quantifie le compromis entre la quantité de contextualité et la quantité de communication pour dériver une limite sur le score maximum réalisable d'un test de Bell mis en œuvre sans séparation spatiale. Nous incorporons cette limite dans un protocole de certification du caractère aléatoire avec les normes de sécurité les plus élevées : les nombres obtenus sont garantis de manière indépendante du dispositif et en présence d'information auxiliaire quantique. Notre résultat fournit une méthode générale pour la génération de caractères aléatoires indépendante du dispositif sur un dispositif petite taille. Nous mettons en œuvre ensuite ce protocole sur une puce photonique. À notre connaissance, il s'agit de la première mise en œuvre d'un protocole de certification de caractères aléatoires sur une puce photonique intégrée.

BIBLIOGRAPHIE

[1] M. Herrero-Collantes et JC Garcia-Escartin, « Quantum random number generators, » Review of Modern Physics, vol. 89, p. 015004, février 2017.

[2] N. Brunner, D. Cavalcanti, S. Pironio, V. Scarani et S.Wehner, « Bell non locality, » Review of Modern Physics, vol. 86, p. 419-478, avril 2014.

[3] S. Abramsky et A. Brandenburger, « The sheaf-theoretic structure of non-locality and contextuality, » New Journal of Physics, vol. 13, p. 113036, novembre 2011.

[4] A. Cabello, S. Severini et A. Winter, « Graph-theoretic approach to quantum correlations, » Phys. Rev. Lett., vol. 112, p. 040401, janvier 2014.

[5] A. Acín, T. Fritz, A. Leverrier et AB Sainz, « A combinatorial approach to nonlocality and contextuality, » Communications in Mathematical Physics, vol. 334, n° 2, p. 533-628, 2015.

[6] A. Acín et L. Masanes, « Certified randomness in quantum physics, » Nature, vol. 540, n° 7632, p. 213-219, 2016.

[7] D. Gavinsky, J. Kempe, I. Kerenidis, R. Raz et R. de Wolf, « Exponential separations for one-way quantum communication complexity, with applications to cryptography, » dans Actes du trente-neuvième symposium annuel de l'ACM sur Théorie de l'informatique, STOC '07, (New York, NY, États-Unis), pp. 516-525, Association for Computing Machinery, 2007.

[8] B. Hensen, H. Bernien, AE Dréau, A. Reiserer, N. Kalb, MS Blok, J. Ruitenberg, RFL Vermeulen, RN Schouten, C. Abellàn, W. Amaya, V. Pruneri, MW Mitchell, M. Markham, DJ Twitchen, D. Elkouss, S. Wehner, TH Taminiau et R. Hanson, « Loophole free bell inequality violation using electron spins separated by 1.3 kilometres, » Nature, vol. 526, n° 7575, p. 682-686, 2015.

[9] M. Giustina, MAM Versteegh, S. Wengerowsky, J. Handsteiner, A. Hochrainer, K. Phelan, F. Steinlechner, J. Kofler, J.-A. Larsson, C. Abellàn, W. Amaya, V. Pruneri, MW Mitchell, J. Beyer, T. Gerrits, AE Lita, LK Shalm, SW Nam, T. Scheidl, R. Ursin, B. Wittmann et A. Zeilinger, « Significant-loopholefree test of bell's theorem with entangled photons, » Phys. Rev. Lett., vol. 115, p. 250401, 2015.

[10] LK Shalm, E. Meyer-Scott, BG Christensen, P. Bierhorst, MA Wayne, MJ Stevens, T. Gerrits, S. Glancy, DR Hamel, MS Allman, KJ Coakley, SD Dyer, C. Hodge, AE Lita, VB Verma, C. Lambrocco, E. Tortorici, AL Migdall, Y. Zhang, DR Kumor, WH Farr, F. Marsili, MD Shaw, JA Stern, C. Abell'an, W. Amaya, V. Pruneri, T. Jennewein, MW Mitchell, PG Kwiat, JC Bienfang, RP Mirin, E. Knill et SW Nam, « Strong loophole-free test of local realism, » Phys. Rev. Lett., vol. 115, p. 250402, 2015.

[11] B. Bourdoncle, P.-S. Lin, D. Rosset, A. Acán et Y.-C. Liang, « Regularising data for practical randomness generation, » Quantum Science and Technology, vol. 4, no 2, p. 025007, 2019.

[12] J. Silman, S. Pironio et S. Massar, « Deviceindependent randomness generation in the presence of weak crosstalk, » Phys. Rev. Lett., vol. 110, p. 100504, mars 2013.

[13] C. A. Miller et Y. Shi, « Universal security for randomness,expansion from the spot-checking protocol, » SIAM Journal on Computing, vol. 46, no 4, p. 1304-1335, 2017.

[14] S. Abramsky, RS Barbosa et S. Mansfield, « Contextual fraction as a measure of contextuality, » Physical Review Letters, vol. 119, p. 050504, août 2017

[15] P.-E. Emeriau, S. Mansfield et D. Markham, « Corrected Bell and noncontextuality inequalities for realistic experiments. » en préparation.

[16] JF Clauser, MA Horne, A. Shimony et RA Holt, « Proposed experiment to test local hidden-variable theories, » Physical Review Letters, vol. 23, pp. 880-884, octobre 1969.

[17] S. Abramsky et L. Hardy, « Logical bell inequalities, » Phys. Rév. A, vol. 85, p. 062114, 2012.

[18] M. Um, Q. Zhao, J. Zhang, P. Wang, Y. Wang, M. Qiao, H. Zhou, X. Ma et K. Kim, « Randomness expansion secured by quantum contextuality, » Phys. Rév. appliquée, vol. 13, p. 034077, 2020.

[19] M. Navascués, S. Pironio et A. Acín, « Bounding the set of quantum correlations, » Phys. Rev. Lett., vol. 98, p. 010401, 2007.

[20] M. Navascués, S. Pironio et A. Acín, « A convergent hierarchy of semidefinite programs characterizing the set of quantum correlations, » New Journal of Physics, vol. 10, no 7, p. 073013, 2008.

[21] S. Pironio et S. Massar, « Security of practice private randomness generation, » Physical Review A, vol. 87, p. 012336, janvier 2013.

[22] R. Konig, R. Renner et C. Schaffner, « The operational meaning of min- and max- entropy, » IEEE Transactions on Information Theory, vol. 55, no 9, pp. 4337-4347, 2009.

[23] A. Acín, S. Massar et S. Pironio, « Randomness versus non locality and entanglement », Physical Review Letters, vol. 108, p. 100402, mars 2012.

[24] R. ArnonFriedman, F. Dupuis, O. Fawzi, R. Renner et T. Vidick, « Practical device-independent quantum cryptography via entropy accumulation, » Nature Communications, vol. 9, no 1, p. 459, 2018.

[25] R. Renner, Security of quantum key distrubtion. Thèse de doctorat, ETH Zurich, 2005

[26] A. De, C. Portmann, T. Vidick et R. Renner, « Trevisan's extractor in the presence of quantum side information, » SIAM Journal on Computing, vol. 41, no 4, p. 915-940, 2012.

[27] X. Ma, F. Xu, H. Xu, H. Tan, B. Qi et H.-K. Lo, « Postprocessing for quantum random-number generators: Entropy evaluation and randomness extraction, » Phys. Rév. A, vol. 87, p. 062327, juin 2013.

[28] AM Barth, S. Lüker, A. Vagov, DE Reiter, T. Kuhn et VM Axt, « Fast and selective phonon-assisted state preparation of a quantum dot by adiabatic undressing, » Phys. Rév. B, vol. 94, p. 45306, juillet 2016.

[29] M. Cosacchi, F. Ungar, M. Cygorek, A. Vagov et VM Axt, « Emission-Frequency Separated High Quality Single-Photon Sources Enabled by Phonons, » Phys. Rev. Lett., vol. 123, p. 17403, juillet 2019.

[30] C. Gustin et S. Hughes, « Efficient Pulse-Excitation Techniques for Single Photon Sources from Quantum Dots in Optical Cavities, » Advanced Quantum Technologies, vol. 3, no 2, p. 1900073, 2020.

[31] S. E. Thomas, M. Billard, N. Coste, SC Wein, Priya, H. Ollivier, O. Krebs, L. Tazärt, A. Harouri, A. Lemaitre, I. Sagnes, C. Anton, L. Lanco, N. Somaschi, JC Loredo et P. Senellart, « Bright Polarized Single- Photon Source Based on a Linear Dipole, » Physical Review Letters, vol. 126, p. 233601, juin 2021.

[32] R. Loudon, The Quantum Theory of Light. OUP Oxford, 2000.

[33] H. Ollivier, SE Thomas, SC Wein, IM de Buy Wenniger, N. Coste, JC Loredo, N. Somaschi, A. Harouri, A. Lemaitre, I. Sagnes, L. Lanco, C. Simon, C. Anton, O. Krebs et P. Senellart, « Hong-Ou-Mandel Interference with Imperfect Single Photon Sources, » Physical Review Letters, vol. 126, p. 63602, février 2021.

[34] Rutvij Bhavsar et Al., « Improved device-independant randomness expansion rates from tight bounds on the two sided randomness using CHSH tests », Cornell University Library, 23 mai 2021, XP081954339.

[35] Pirandola S et Al., « Advances in Quantum Cryptography », Cornell University Library, 4 juin 2019, XP081373072.

[36] Chen-Xi Liu et Al., « Experimental realization of more quantum randomness generation based on non-projective measurement », Journal of Physics, Bristol, 27 juin 2019, XP020341581.

**EP 4 500 315 B1**

[37] Armin Takavoli et Al., « Does violation of a Bell inequality always imply quantum advantage in a communication complexity problem ? », Cornell University Library, 2 juillet 2019, XP081388578.
[38] Emanuel Knil et Al., « Quantum Randomness Generation by Probability Estimation with Classical Side Information », Cornell University Library, 18 septembre 2017, XP080817173.
[39] Mataj Pivoluska et Al., « Device Independant Random Number Generation », Cornell University Library, 23 février 2015, XP081331331.
[40] Manabendra Nath Bera et Al., « Randomness in Quantum Mechanics : Philosophy, Physics and Technology », Cornell University Library, 7 novembre 2016, XP081363988.
[41] Xiao Yuan et Al., « Interplay between Quantumness, Randomness, and Selfttesting », Cornell University Library, 2 mars 2017, XP080753675.
[42] Antonio Acín et Al., « Certified randomness in quantum physics », Cornell University Library, 1 août 2017, XP080950813.

## Revendications

**1.** Procédé de génération et de certification simultanées de nombres aléatoires à l'aide d'un dispositif quantique, D, qui admet un ensemble d'entrées et un ensemble de sorties, et qui produit de manière probabiliste une sortie de l'ensemble de sorties lors de la réception d'une entrée de l'ensemble d'entrées, le procédé comprenant les phases suivantes :

i. une première phase comprenant la définition des paramètres suivants :

• un paramètre de dépendance $\sigma$, qui est un nombre réel compris dans l'intervalle 0 à 1 inclus, quantifiant le flux d'information maximum pouvant se produire entre les composants d'un dispositif quantique ou non quantique,
• un jeu, G,

générique non local ou contextuel compatible avec le dispositif quantique D,
c'est-à-dire admettant les mêmes ensemble d'entrées et ensemble de sorties, **caractérisé par** :

◦ une distribution de probabilité sur l'ensemble des entrées,
◦ une fonction de score, V,

qui prend une valeur 0 ou 1 pour toute paire donnée d'entrée et de sortie, et pour lequel nous pouvons également calculer : une cohérence **k,** qui est la valeur maximum sur les sorties de la somme sur les entrées de la fonction de score V, un score **w** obtenu en jouant au jeu G à l'aide du dispositif quantique D, un nombre **n** d'entrées admises par le dispositif quantique D et par le jeu G,

ii. une seconde phase comprenant l'exécution d'un protocole qui produit une séquence de bits,

**le procédé étant caractérisé en ce que** le paramètre de dépendance $\sigma$ quantifie le flux d'information maximum pouvant se produire entre les composants du dispositif quantique D en raison d'interférence non désirée entre les composants,
**en ce que** le paramètre de dépendance $\sigma$ est pris comme la solution optimale à un problème d'optimisation appelé « fraction de signal quantique », qui trouve la distance entre le comportement d'entrée-sortie estimé du dispositif quantique D et l'ensemble de corrélations d'entrée-sortie **caractérisées par** un niveau donné de la hiérarchie Navascues-Pironio-Acin, NPA, de programmes semi-définis positifs,
**en ce que** la première phase comprend également la définition des paramètres suivants :

- un score classique **S_cl^$\sigma$,** qui est le score maximum pour le jeu G pouvant être atteint par tout dispositif local ou non contextuel, qui admet les mêmes ensemble d'entrées et ensemble de sorties que le jeu G et qui a un paramètre de dépendance $\sigma$, qui est tel que **S_cl^$\sigma$ $\leq$( k + (n-k)*$\sigma$)/n,**
- une entrée spécifique appelée « entrée singularisée », x, où le score maximum atteignable par tout dispositif quantique ou non quantique qui admet les mêmes ensemble d'entrées et ensemble de sorties que le jeu G, qui présente le paramètre de dépendance $\sigma$ et qui est déterministe sur l'entrée singularisée x est appelé « score avec entrée singularisé » S_x^$\sigma$, et est tel que S_x^$\sigma$ $\leq$ **S_cl^$\sigma$** dans le cas de jeux non-locaux avec entrées binaires,

**14**

**en ce que** le protocole est configuré comme suit :

i. dans la première phase, nous définissons les paramètres suivants :

- le jeu G, qui comporte **n** entrées et est **k** cohérent,
- un seuil de score $\chi$, qui est un nombre réel de l'intervalle [0, 1],
- une probabilité de test **q,** qui est un nombre réel de l'intervalle [0, 1],
- une longueur de sortie **N,** qui est un nombre entier positif,
- un niveau **l** de la hiérarchie NPA, qui est un nombre entier positif ;
- une table **ê** correspondant à un comportement estimé du dispositif quantique D, qui comporte des parties correspondant à des entrées et des sorties, et qui est initialement mise à zéro,
- une estimation de score **c,** qui est une estimation du score atteint par le dispositif quantique D pour le jeu G, qui est un nombre réel de l'intervalle [0,1], et qui est initialisé à zéro,

ii. dans la seconde phase : les étapes suivantes sont répétées N fois : le bit t prend la valeur 0 ou 1 selon la distribution (q, 1-q) si t = 1, "tour de jeu", le jeu G est joué à l'aide du dispositif quantique D, l'entrée et la sortie sont enregistrées dans la partie correspondante du tableau **ê** et le score **w** du jeu G est ajouté à l'estimation du score **c,** si t = 0, "tour de génération", alors l'entrée spécifique x est entrée dans le dispositif quantique D et la sortie est enregistrée, la fraction de signal de la table **ê** au niveau l de la hiérarchie NPA, notée **SF_l,** est calculée

si **c** / (**qN**) - **SF_l**.$(2^n - k)/2^n \leq \chi$**,** alors le protocole échoue ;
sinon le protocole réussit et certifie le fait que la séquence de bits contient une entropie minimale positive même en présence d'information auxiliaire quantique.

2. Procédé selon la revendication 1, dans lequel le jeu non local est le jeu CHSH, qui est tel que **n** = 4 et **k** = 3.

3. Système (1) de mise en œuvre du procédé selon l'une quelconque des revendications 1 ou 2, comprenant un dispositif quantique D.

4. Système (1) selon la revendication 3, comprenant une source de photons uniques à points quantiques.

5. Système (1) selon l'une quelconque des revendications 3 ou 4, comprenant une puce photonique.

6. Système (1) selon la revendication 5, dans lequel la puce photonique comprend des séparateurs de faisceau et des déphaseurs thermo-optiques, et dans lequel les entrées du dispositif quantique D correspondent au choix des paramètres des déphaseurs.

7. Système (1) selon l'une quelconque des revendications 3 à 5, comprenant des détecteurs de photons, et dans lequel les sorties du dispositif quantique D correspondent à des événements de détection de photons.

8. Système (1) selon l'une quelconque des revendications 3 à 7, comprenant un logiciel de service cryptographique intégrant une interface utilisateur et un module de traitement de données,

- où l'interface utilisateur est configurée pour recevoir une requête d'un utilisateur pour obtenir une clé cryptographique et transmettre une clé cryptographique cryptée au client
- où le module de traitement de données est en communication avec le dispositif quantique D, configuré pour transmettre une requête au dispositif quantique D pour recevoir une séquence de bits aléatoire, puis tester la séquence de bits pour certifier le fait que la séquence de bits contient une entropie minimale positive même en présence d'information auxiliaire quantique, puis en cas de validation du test, générer une clé cryptographique cryptée à partir de la séquence de bits, puis transmettre la clé cryptographique cryptée à l'utilisateur via l'interface utilisateur.

9. Système (1) selon l'une des revendications 3 à 8, comprenant un module de stockage de séquences de bits contenant une entropie minimale positive même en présence d'information auxiliaire quantique, précédemment certifiées grâce au dispositif quantique D.

**Patentansprüche**

1. Verfahren zur simultanen Erzeugung und Zertifizierung von Zufallszahlen mittels einer Quantenvorrichtung, D, die einen Satz von Eingängen und einen Satz von Ausgängen zulässt und die bei Empfang eines Eingangs aus dem Satz von Eingängen probabilistisch einen Ausgang aus dem Satz von Ausgängen erzeugt, wobei das Verfahren die folgenden Phasen umfasst:

   i. eine erste Phase, umfassend die Definition der folgenden Parameter:

   • einen Abhängigkeitsparameter $\sigma$, der eine reelle Zahl innerhalb des Intervalls 0 bis einschließlich 1 ist, der den maximalen Informationsfluss quantifiziert, der zwischen den Komponenten einer Quanten- oder Nicht-Quantenvorrichtung auftreten kann,
   • ein nicht-lokales oder kontextabhängiges generisches Spiel, G, das mit der Quantenvorrichtung D kompatibel ist, das heißt, das dieselben Sätze von Eingängen und Sätze von Ausgängen zulässt, **gekennzeichnet durch:**

   ◦ eine Wahrscheinlichkeitsverteilung über den Satz von Eingängen,
   ◦ eine Score-Funktion, V, die für jedes gegebene Paar von Ein- und Ausgängen einen Wert 0 oder 1 annimmt, und für die wir ebenfalls berechnen können:
   eine Kohärenz **k,** die der Maximalwert an den Ausgängen der Summe an den Eingängen der Score-Funktion V ist, einen Score **w,** der durch Spielen des Spiels G mittels der Quantenvorrichtung D erhalten wird, eine Anzahl n von Eingängen, die von der Quantenvorrichtung D und von dem Spiel G zugelassen werden,

   ii. eine zweite Phase, die die Ausführung eines Protokolls umfasst, das eine Bitfolge erzeugt,
   **wobei das Verfahren dadurch gekennzeichnet ist, dass** der Abhängigkeitsparameter $\sigma$ den maximalen Informationsfluss quantifiziert, der zwischen den Komponenten der Quantenvorrichtung D aufgrund unerwünschter Interferenz zwischen den Komponenten auftreten kann, **dadurch, dass** der Abhängigkeitsparameter $\sigma$ als die optimale Lösung für ein Optimierungsproblem mit der Bezeichnung "Quantensignalfraktion" angenommen wird, das den Abstand zwischen dem geschätzten Eingangs-Ausgangs-Verhalten der Quantenvorrichtung D und dem Satz von Eingangs-Ausgangs-Korrelationen ermittelt, die **gekennzeichnet sind durch** eine gegebene Ebene der Navascues-Pironio-Acin-, NPA-, Hierarchie von positiv semidefiniten Programmen, **dadurch, dass** die erste Phase auch die Definition der folgenden Parameter umfasst:

   - einen klassischen Score **S_cl^$\sigma$,** welcher der maximale Score für das Spiel G ist, der von jeder lokalen oder nicht-kontextabhängigen Vorrichtung erreicht werden kann, die dieselben Sätze von Eingängen und Sätze von Ausgängen wie das Spiel G zulässt und die einen Abhängigkeitsparameter $\sigma$ aufweist, welcher derart ist, dass **S_cl^$\sigma \leq$ (k + (n-k)\*$\sigma$)/n,**
   - einen spezifischen Eingang mit der Bezeichnung "singularisierter Eingang" x, wobei der maximale Score, der durch jede Quantenvorrichtung oder Nicht-Quantenvorrichtung erreichbar ist, die dieselben Sätze von Eingängen und Sätze von Ausgängen wie das Spiel G zulässt, der den Abhängigkeitsparameter $\sigma$ aufweist und der auf dem singularisierten Eingang x deterministisch ist, als "Score mit singularisiertem Eingang" S_x^$\sigma$ bezeichnet wird und derart ist, dass S_x^$\sigma \leq$ **S_cl^$\sigma$** im Fall von nicht-lokalen Spielen mit binären Eingängen, **dadurch gekennzeichnet, dass** das Protokoll wie folgt konfiguriert ist:

   i. in der ersten Phase definieren wir die folgenden Parameter:

   • das Spiel G, das **n** Eingänge umfasst und **k** kohärent ist,
   • einen Score-Schwellenwert $\chi$, der eine reelle Zahl aus dem Intervall [0, 1] ist,
   • eine Testwahrscheinlichkeit **q,** die eine reelle Zahl aus dem Intervall [0, 1] ist,
   • eine Ausgangslänge **N,** die eine positive ganze Zahl ist,
   • eine Ebene **l** der NPA-Hierarchie, die eine positive ganze Zahl ist;
   • eine Tabelle **ê**, die einem geschätzten Verhalten der Quantenvorrichtung D entspricht, die Teile aufweist, die Eingängen und Ausgängen entsprechen, und die anfänglich auf Null gesetzt wird,
   • eine Schätzung des Score c, die eine Schätzung des von der Quantenvorrichtung D für das Spiel G erreichten Score ist, die eine reelle Zahl aus dem Intervall [0,1] ist und die auf Null initialisiert wird,

   ii. in der zweiten Phase:

werden die folgenden Schritte **N**-mal wiederholt:

das Bit t nimmt entsprechend der Verteilung (q, 1-q) den Wert 0 oder 1 an, wenn t = 1, "Spielrunde", das Spiel G wird mit Hilfe der Quantenvorrichtung D gespielt, der Eingang und der Ausgang werden in dem entsprechenden Teil der Tabelle **ê** aufgezeichnet und der Score **w** des Spiels G wird zu der Schätzung des Score **c** hinzugefügt, wenn t = 0, "Generierungsrunde", dann wird der spezifische Eingang x in die Quantenvorrichtung D eingegeben und der Ausgang wird aufgezeichnet, die Signalfraktion der Tabelle **ê** auf der Ebene **l** der NPA-Hierarchie, bezeichnet als **SF_l,** wird berechnet wenn **c** / **(qN)** - **SF_l.(2^n - k)**/2^n $\leq \chi$, dann schlägt das Protokoll fehl;

andernfalls ist das Protokoll erfolgreich und zertifiziert die Tatsache, dass die Bitfolge selbst bei Vorhandensein von Quantenhilfsinformationen eine positive Mindestentropie enthält.

2. Verfahren nach Anspruch 1, wobei das nicht-lokale Spiel das CHSH-Spiel ist, welches derart ist, dass **n** = 4 et **k** = 3.

3. System (1) zur Implementierung des Verfahrens nach einem der Ansprüche 1 oder 2, umfassend eine Quantenvorrichtung D.

4. System (1) nach Anspruch 3, umfassend eine Quantenpunkt-Einzelphotonenquelle.

5. System (1) nach einem der Ansprüche 3 oder 4, umfassend einen photonischen Chip.

6. System (1) nach Anspruch 5, wobei der photonische Chip Strahlteiler und thermo-optische Phasenschieber umfasst, und wobei die Eingänge der Quantenvorrichtung D der Auswahl der Parameter der Phasenschieber entsprechen.

7. System (1) nach einem der Ansprüche 3 bis 5, umfassend Photonendetektoren, und wobei die Ausgänge der Quantenvorrichtung D Photonendetektionsereignissen entsprechen.

8. System (1) nach einem der Ansprüche 3 bis 7, umfassend eine kryptographische Dienstsoftware, in die eine Benutzeroberfläche und ein Datenverarbeitungsmodul integriert sind,

• wobei die Benutzeroberfläche dazu konfiguriert ist, eine Anforderung von einem Benutzer zum Erhalten eines kryptographischen Schlüssels zu empfangen und einen verschlüsselten kryptographischen Schlüssel an den Client zu übertragen
• wobei das Datenverarbeitungsmodul in Kommunikation mit der Quantenvorrichtung D steht, konfiguriert zum Übertragen einer Anforderung an die Quantenvorrichtung D zum Empfangen einer Zufallsbitfolge, dann zum Testen der Bitfolge zum Zertifizieren der Tatsache, dass die Bitfolge eine positive Mindestentropie auch bei Vorhandensein von Quantenhilfsinformationen enthält, dann bei Validierung des Tests, zum Generieren eines verschlüsselten kryptographischen Schlüssels aus der Bitfolge, dann zum Übertragen des verschlüsselten kryptographischen Schlüssels an den Benutzer über die Benutzeroberfläche.

9. System (1) nach einem der Ansprüche 3 bis 8, umfassend ein Speichermodul für Bitfolgen, die eine positive Mindestentropie auch bei Vorhandensein von Quantenhilfsinformationen enthalten, die zuvor mittels der Quantenvorrichtung D zertifiziert wurden.

**Claims**

1. Method for the simultaneous generation and certification of random numbers using a quantum device, D, which admits a set of inputs and a set of outputs, and which produces an output probabilistically from the set of outputs upon receipt of an input from the set of inputs, the method comprising the following phases:

i. a first phase comprising defining the following parameters:

• a dependency parameter $\sigma$, which is a real number in the range 0 to 1 inclusive, quantifying the maximum information flow that can occur between the components of a quantum or non-quantum device,
• a non-local or contextual generic game, G, which is compatible with the quantum device D, i.e. admitting the same set of inputs and set of outputs, **characterized by:**

○ a probability distribution over the set of inputs,

○ a score function, V, which takes a value of 0 or 1 for any given input and output pair, and for which the following can also be calculated:

a coherence **k,** which is the maximum value on the outputs of the sum on the inputs of the score function V, a score **w** obtained by playing the game G using the quantum device D, a number **n** of inputs admitted by the quantum device D and by the game G,

ii. a second phase comprising executing a protocol which produces a bit sequence,

**the method being characterized in that** the dependency parameter $\sigma$ quantifies the maximum information flow that can occur between the components of the quantum device D due to unwanted interference between the components, **in that** the dependency parameter $\sigma$ is taken as the optimal solution to an optimization problem referred to as "quantum signal fraction", which finds the distance between the estimated input-output behavior of the quantum device D and the set of input-output correlations **characterized by** a given level of the Navascues-Pironio-Acin, NPA, hierarchy of positive semidefinite programs, **in that** the first phase also comprises defining the following parameters:

- a classical score **S_cl^$\sigma$**, which is the maximum score for the game G that can be achieved by any local or non-contextual device, which admits the same input set and output set as the game G and which has a dependency parameter $\sigma$, which is such that **S_cl^$\sigma \le$ (k + (n-k)*$\sigma$)/n,**
- a specific input referred to as "singularized input", x, where the maximum score achievable by any quantum or non-quantum device which admits the same input set and output set as the game G, which has the dependency parameter $\sigma$ and which is deterministic on the singularized input x is referred to as "score with singularized input" **S_x^$\sigma$,** and is such that **S_x^$\sigma \le$ S_cl^$\sigma$** in the case of non-local games with binary inputs,

**in that** the protocol is configured as follows:

i. in the first phase, the following parameters are defined:

• the game G, which has **n** inputs and is **k**-coherent,
• a score threshold $\chi$, which is a real number in the range [0, 1],
• a test probability **q,** which is a real number in the range [0, 1],
• an output length **N,** which is a positive integer,
• a level **l** of the NPA hierarchy, which is a positive integer;
• a table **ê** corresponding to an estimated behavior of the quantum device D, which comprises parts corresponding to inputs and outputs, and which is initially set to zero,
• a score estimate **c,** which is an estimate of the score achieved by the quantum device D for the game G, which is a real number in the range [0,1], and which is initialized to zero,

ii. in the second phase:

the following steps are repeated **N** times:

the bit t takes the value 0 or 1 according to the distribution (q, 1-q) if t = 1, "game turn", the game G is played using the quantum device D, the input and output are recorded in the corresponding part of the array **ê** and the score **w** of the game G is added to the score estimate **c,** if t = 0, "generation turn", then the specific input x is entered into the quantum device D and the output is recorded, the signal fraction of the table **ê** at level **l** of the NPA hierarchy, written **SF_l,** is calculated if **c / (qN) - SF_l**.(2^**n** - **k**)/2^n $\le \chi$, then the protocol fails;

otherwise the protocol succeeds and certifies that the bit sequence has minimal positive entropy even in the presence of quantum auxiliary information.

2. Method according to claim 1, wherein the non-local game is the CHSH game, which is such that **n** = 4 and **k** = 3.

3. System (1) for carrying out the method according to any one of claims 1 or 2, comprising a quantum device D.

4. System (1) according to claim 3, comprising a quantum dot single-photon source.

**5.** System (1) according to any one of claims 3 or 4, comprising a photonic chip.

**6.** System (1) according to claim 5, wherein the photonic chip comprises beam splitters and thermo-optical phase shifters, and wherein the inputs of the quantum device D correspond to the choice of phase shifter parameters.

**7.** System (1) according to any one of claims 3 to 5, comprising photon detectors, and wherein the outputs of the quantum device D correspond to photon detection events.

**8.** System (1) according to any one of claims 3 to 7, comprising cryptographic service software integrating a user interface and a data processing module,

• wherein the user interface is configured to receive a request from a user to obtain a cryptographic key and transmit an encrypted cryptographic key to the client
• wherein the data processing module is in communication with the quantum device D, configured to transmit a request to the quantum device D to receive a random bit sequence, then test the bit sequence to certify that the bit sequence has minimal positive entropy even in the presence of quantum auxiliary information, then, in the event of validating the test, generate an encrypted cryptographic key from the bit sequence, then transmit the encrypted cryptographic key to the user via the user interface.

**9.** System (1) according to one of claims 3 to 8, comprising a module for storing bit sequences having minimal positive entropy even in the presence of quantum auxiliary information, previously certified by means of the quantum device D.

[Fig. 1]

Processus quantique          Post-traitement classique

[Fig. 2]

$$H_{\min}^{\delta}(\mathbf{AB}|\mathbf{XY}, E) \geq N(\pi(\chi) - \Delta) \qquad (1)$$

avec

$$\pi(\chi) = 2\frac{\log(e)(\chi - S_{\mathrm{cl}})^2}{r - 1};$$

$$\Delta = \frac{\varepsilon}{q}\frac{8\log(e)(\chi - S_{\mathrm{cl}})^2}{(r-1)^2} + \left(\frac{\varepsilon}{q}\right)^2\frac{32\log(e)(\chi - S_{\mathrm{cl}})^3}{3(r-1)^3}$$

$$\cdot 2^{\frac{\varepsilon}{q}\frac{4\log(e)(\chi - S_{\mathrm{cl}})}{r-1}} + \frac{\log(2/\delta^2)}{N\varepsilon} + 2rq,$$

[Fig. 3]

[Fig. 4]

[Fig. 5]

[Fig. 6]

# Fig.7

Fixer paramètres:
- $N = 2.4 \times 10^9$
- $q = 1.343 \times 10^{-4}$

Calibrer voltages pour contextes $\{(A_i, B_j)\}_{i,j \in \{0,1\}}$

Attendre 6 heures

Choisir $n_{gen}$ selon distribution géométrique de paramètre

- Fermer obturateur motorisé
- Mesurer $g^{(2)}(0)$
- Recalibrer voltage pour contextes
- Mesurer $g^{(2)}(0)$ à nouveau

- Mesurer $n_{gen}$ coincidences entre Alice et Bob dans contexte $(A_0, B_0)$
- Enregistrer résultats comme tour de génération

Choisir contexte de mesure $(A_i, B_j)$ au hasard

?
$(A_0, B_0) = (A_i, B_j)$

Oui   Non

- Fixer contexte courant à $(A_0, B_0)$
- Attendre 250ms

- Fixer contexte courant à $(A_i, B_j)$
- Attendre 250ms

Non   Oui
?
$(A_i, B_j) = (A_0, B_0)$

Acquérir histogramme de corrélation entre sorties '0' et '1' d'Alice

- Mesurer une coincidence entre Alice et Bob dans contexte $(A_i, B_j)$
- Enregistrer résultat et contexte comme tour de test

$n_{rounds} \leftarrow n_{rounds} + n_{gen} + 1$

Non   ?
$n_{rounds} > N$   Oui

- Sauvegarder données
- Quitter protocole

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2020226715 A

- WO 2019125733 A

**Littérature non-brevet citée dans la description**

- **M. HERRERO-COLLANTES** ; **JC GARCIA-ESCAR-TIN**. Quantum random number generators. *Review of Modern Physics*, February 2017, vol. 89, 015004
- **N. BRUNNER** ; **D. CAVALCANTI** ; **S. PIRONIO** ; **V. SCARANI** ; **S.WEHNER**. Bell non locality. *Review of Modern Physics*, April 2014, vol. 86, 419-478
- **S. ABRAMSKY** ; **A. BRANDENBURGER**. The sheaf-theoretic structure of non-locality and contextuality. *New Journal of Physics*, November 2011, vol. 13, 113036
- **A. CABELLO** ; **S. SEVERINI** ; **A. WINTER**. Graph-theoretic approach to quantum correlations. *Phys. Rev. Lett.*, January 2014, vol. 112, 040401
- **A. ACÍN** ; **T. FRITZ** ; **A. LEVERRIER** ; **AB SAINZ**. A combinatorial approach to nonlocality and contextuality. *Communications in Mathematical Physics*, 2015, vol. 334 (2), 533-628
- **A. ACÍN** ; **L. MASANES**. Certified randomness in quantum physics. *Nature*, 2016, vol. 540 (7632), 213-219
- Exponential separations for one-way quantum communication complexity, with applications to cryptography. **D. GAVINSKY** ; **J. KEMPE** ; **I. KERENIDIS** ; **R. RAZ** ; **R. DE WOLF**. Actes du trente-neuvième symposium annuel de l'ACM sur Théorie de l'informatique, STOC '07, (New York, NY, États-Unis). Association for Computing Machinery, 2007, 516-525
- **B. HENSEN** ; **H. BERNIEN** ; **AE DRÉAU** ; **A. REISERER** ; **N. KALB** ; **MS BLOK** ; **J. RUITEN-BERG** ; **RFL VERMEULEN** ; **RN SCHOUTEN** ; **C. ABELLÀN**. Loophole free bell inequality violation using electron spins separated by 1.3 kilometres. *Nature*, 2015, vol. 526 (7575), 682-686
- **M. GIUSTINA** ; **MAM VERSTEEGH** ; **S. WENGE-ROWSKY** ; **J. HANDSTEINER** ; **A. HOCHRAINER** ; **K. PHELAN** ; **F. STEINLECHNER** ; **J. KOFLER** ; **J.-A. LARSSON** ; **C. ABELLÀN**. Significant-loopholefree test of bell's theorem with entangled photons. *Phys. Rev. Lett.*, 2015, vol. 115, 250401

- **LK SHALM** ; **E. MEYER-SCOTT** ; **BG CHRISTEN-SEN** ; **P. BIERHORST** ; **MA WAYNE** ; **MJ STEVENS** ; **T. GERRITS** ; **S. GLANCY** ; **DR HAMEL** ; **MS ALLMAN**. Strong loophole-free test of local realism. *Phys. Rev. Lett.*, 2015, vol. 115, 250402
- **B. BOURDONCLE** ; **P.-S. LIN** ; **D. ROSSET** ; **A. ACÁN** ; **Y.-C. LIANG**. Regularising data for practical randomness generation. *Quantum Science and Technology*, 2019, vol. 4 (2), 025007
- **J. SILMAN** ; **S. PIRONIO** ; **S. MASSAR**. Deviceindependent randomness generation in the presence of weak cross-talk. *Phys. Rev. Lett.*, March 2013, vol. 110, 100504
- **C. A. MILLER** ; **Y. SHI**. Universal security for randomness,expansion from the spot-checking protocol. *SIAM Journal on Computing*, 2017, vol. 46 (4), 1304-1335
- **S. ABRAMSKY** ; **RS BARBOSA** ; **S. MANSFIELD**. Contextual fraction as a measure of contextuality. *Physical Review Letters*, August 2017, vol. 119, 050504
- **P.-E. EMERIAU** ; **S. MANSFIELD** ; **D. MARKHAM**. *Corrected Bell and noncontextuality inequalities for realistic experiments*
- **JF CLAUSER** ; **MA HORNE** ; **A. SHIMONY** ; **RA HOLT**. Proposed experiment to test local hidden-variable theories. *Physical Review Letters*, October 1969, vol. 23, 880-884
- **S. ABRAMSKY** ; **L. HARDY**. Logical bell inequalities. *Phys. Rév. A*, 2012, vol. 85, 062114
- **M. UM** ; **Q. ZHAO** ; **J. ZHANG** ; **P. WANG** ; **Y. WANG** ; **M. QIAO** ; **H. ZHOU** ; **X. MA** ; **K. KIM**. Randomness expansion secured by quantum contextuality. *Phys. Rév. appliquée*, 2020, vol. 13, 034077
- **M. NAVASCUÉS** ; **S. PIRONIO** ; **A. ACÍN**. Bounding the set of quantum correlations. *Phys. Rev. Lett.*, 2007, vol. 98, 010401
- **M. NAVASCUÉS** ; **S. PIRONIO** ; **A. ACÍN**. A convergent hierarchy of semidefinite programs characterizing the set of quantum correlations. *New Journal of Physics*, 2008, vol. 10 (7), 073013
- **S. PIRONIO** ; **S. MASSAR**. Security of practice private randomness generation. *Physical Review A*, January 2013, vol. 87, 012336

- **R. KONIG** ; **R. RENNER** ; **C. SCHAFFNER**. The operational meaning of min- and max- entropy. *IEEE Transactions on Information Theory*, 2009, vol. 55 (9), 4337-4347
- **A. ACÍN** ; **S. MASSAR** ; **S. PIRONIO**. Randomness versus non locality and entanglement. *Physical Review Letters*, March 2012, vol. 108, 100402
- **R. ARNONFRIEDMAN** ; **F. DUPUIS** ; **O. FAWZI** ; **R. RENNER** ; **T. VIDICK**. Practical device-independent quantum cryptography via entropy accumulation. *Nature Communications*, 2018, vol. 9 (1), 459
- **R. RENNER**. Security of quantum key distrubtion.. *Thèse de doctorat, ETH Zurich*, 2005
- **A. DE** ; **C. PORTMANN** ; **T. VIDICK** ; **R. RENNER**. Trevisan's extractor in the presence of quantum side information. *SIAM Journal on Computing*, 2012, vol. 41 (4), 915-940
- **X. MA** ; **F. XU** ; **H. XU** ; **X. TAN** ; **B. QI** ; **H.-K. LO**. Postprocessing for quantum random-number generators: Entropy evaluation and randomness extraction. *Phys. Rév. A*, June 2013, vol. 87, 062327
- **AM BARTH** ; **S. LÜKER** ; **A. VAGOV** ; **DE REITER** ; **T. KUHN** ; **VM AXT**. Fast and selective phonon-assisted state preparation of a quantum dot by adiabatic undressing. *Phys. Rév. B*, July 2016, vol. 94, 45306
- **M. COSACCHI** ; **F. UNGAR** ; **M. CYGOREK** ; **A. VAGOV** ; **VM AXT**. Emission-Frequency Separated High Quality Single-Photon Sources Enabled by Phonons. *Phys. Rev. Lett.*, July 2019, vol. 123, 17403
- **C. GUSTIN** ; **S. HUGHES**. Efficient Pulse-Excitation Techniques for Single Photon Sources from Quantum Dots in Optical Cavities. *Advanced Quantum Technologies*, 2020, vol. 3 (2), 1900073
- **S. E. THOMAS** ; **M. BILLARD** ; **N. COSTE** ; **SC WEIN** ; **PRIYA** ; **H. OLLIVIER** ; **O. KREBS** ; **L. TAZÄRT** ; **A. HAROURI** ; **A. LEMAITRE**. Bright Polarized Single- Photon Source Based on a Linear Dipole. *Physical Review Letters*, June 2021, vol. 126, 233601
- **R. LOUDON**. The Quantum Theory of Light. *OUP Oxford*, 2000
- **H. OLLIVIER** ; **SE THOMAS** ; **SC WEIN** ; **IM DE BUY WENNIGER** ; **N. COSTE** ; **JC LOREDO** ; **N. SOMASCHI** ; **A. HAROURI** ; **A. LEMAITRE** ; **I. SAGNES**. Hong-Ou-Mandel Interference with Imperfect Single Photon Sources. *Physical Review Letters*, February 2021, vol. 126, 63602
- **RUTVIJ BHAVSAR et al.** Improved device-independant randomness expansion rates from tight bounds on the two sided randomness using CHSH tests. Cornell University Library, 23 May 2021
- **PIRANDOLA S et al.** Advances in Quantum Cryptography. Cornell University Library, 04 June 2019
- **CHEN-XI LIU et al.** Experimental realization of more quantum randomness generation based on non-projective measurement. *Journal of Physics, Bristol*, 27 June 2019
- **ARMIN TAKAVOLI et al.** Does violation of a Bell inequality always imply quantum advantage in a communication complexity problem ?. Cornell University Library, 02 July 2019
- **EMANUEL KNIL et al.** Quantum Randomness Generation by Probability Estimation with Classical Side Information. Cornell University Library, 18 September 2017
- **MATAJ PIVOLUSKA et al.** Device Independant Random Number Generation. Cornell University Library, 23 February 2015
- **MANABENDRA NATH BERA et al.** Randomness in Quantum Mechanics : Philosophy, Physics and Technology. Cornell University Library, 07 November 2016
- **XIAO YUAN et al.** Interplay between Quantumness, Randomness, and Selfttesting. Cornell University Library, 02 March 2017
- **ANTONIO ACÍN et al.** Certified randomness in quantum physics. Cornell University Library, 01 August 2017